# EUROPÄISCHE PATENTSCHRIFT

(11) **EP 3 032 148 B1**
(45) Veröffentlichungstag und Bekanntmachung des Hinweises auf die Patenterteilung: **06.12.2017**
(21) Anmeldenummer: 15185532.7
(22) Anmeldetag: 16.09.2015
(51) Int. Cl.: F16J 15/32

(54) **AXIALER WELLENDICHTRING**
AXIAL SHAFT SEAL
BAGUE AXIALE D'ETANCHEITE D'ARBRE

(30) Priorität: 10.12.2014 EP 14197187
(43) Veröffentlichungstag der Anmeldung: 15.06.2016
(73) Patentinhaber: BRUSS Sealing Systems GmbH, 22955 Hoisdorf (DE)
(72) Erfinder: SCHMITT, Wolfgang, 68519 Viernheim (DE)
(74) Vertreter: Müller Verweyen

(56) Entgegenhaltungen:
- DE-A1-102010 047 931
- DE-B1- 1 675 397
- US-A- 4 928 979

## Beschreibung

Die vorliegende Erfindung betrifft einen axialen Wellendichtring zur Abdichtung einer Welle gegen ein Gehäuse nach dem Oberbegriff von Anspruch 1.

Im Hinblick auf verschärfte Emissionsvorschriften besteht eine ständige Nachfrage nach reibungsärmeren Wellendichtringen zur Kurbelwellenabdichtung. Gleichzeitig muss eine ausreichende Stabilität des Wellendichtrings gegen im Betrieb auftretende Unter- und Überdrücke im Motor gewährleistet sein; bspw. können bei modernen Otto-Motoren erhebliche Unterdrücke im Kurbelgehäuse entstehen. In der Vergangenheit wurden zur Kurbelwellenabdichtung reibungsoptimierte Radialwellendichtringe eingesetzt, wobei die Druckstabilisierung durch geeignete Geometrie der Dichtlippe erreicht wurde. Jedoch sind der mit Radialwellendichtringen erzielbaren Reibungsreduzierung Grenzen gesetzt.

Eine Gleitringdichtung zur Abdichtung der Kurbelwelle ist aus der DE 10 2011 114 349 A1 bekannt. Gleitringdichtungen sind im Allgemeinen sehr reibungsarm, bestehen jedoch aus verhältnismäßig vielen Einzelteilen, beanspruchen viel Einbauraum und sind vergleichsweise teuer.

Ein axialer Wellendichtring ist aus Figur 5 der DE 103 34 896 A1 bekannt. Bei diesem Wellendichtring wird durch drei berührende Dichtelemente, nämlich eine berührende Staubdichtung, eine berührende Vorschaltdichtung und eine Dichtmanschette, eine zuverlässige Abdichtung erreicht, jedoch um den Preis einer erhöhten Reibung.

Auch der axiale Wellendichtring gemäß der EP 2 749 796 A1 weist eine über eine axiale Länge auf dem Laufring dichtend aufliegende Staublippe auf, die zwar eine hinreichende Staubdichtigkeit bewirkt, jedoch wiederum zu einer erhöhten Reibung führt. Zudem weist das Dichtelement nur eine geringe Stabilität gegen Unterdruck auf, da die Dichtlippe im Falle von motorseitigem Unterdruck, aufgrund einer Schwächung nahe ihrer Anbindung an den Versteifungsabschnitt, von dem Laufring wegklappt und dann die Dichtfunktionalität vollständig einbüßt.

Die US 4,928,979 offenbart einen Wellendichtring nach dem Oberbegriff von Anspruch 1.

Die Aufgabe der Erfindung besteht darin, einen axialen Wellendichtring bereitzustellen, der mit einfachem Produktdesign eine verringerte Reibung, hinreichende Druckstabilität und in allen Betriebszuständen eine zuverlässige Abdichtung der Kurbelwelle ermöglicht.

Die Erfindung löst diese Aufgabe mit den Merkmalen der unabhängigen Patentansprüche. Die Erfindung beruht zunächst auf der Erkenntnis, dass mit Hilfe einer axialen Dichtung unter Ausnutzung der Fliehkraft grundsätzlich reibungsärmer gedichtet werden kann. Bei axialen Wellendichtringen kann daher im Vergleich zu herkömmlichen Radialwellendichtringen die Anpresskraft der Dichtlippe geringer eingestellt werden, ohne die Dichtfunktionalität zu beeinträchtigen. Des Weiteren hat sich herausgestellt, dass eine in allen Betriebszuständen zuverlässige Abdichtung der Kurbelwelle gegen Fluid mittels einer Dichtlippe, d.h. ohne weitere berührend an dem Laufring oder an der Welle anliegenden Hilfsdichtungen, erreicht werden kann. Es reicht für die Dichtwirkung erfindungsgemäß vollkommen aus, dass im montierten Zustand ausschließlich zwischen einem Endbereich der Dichtlippe und der radialen Gegenlauffläche ein Dichtkontakt besteht. Die Reduzierung der Dichtkontakte führt erfindungsgemäß zu einer Reduzierung der Gesamtreibung des Wellendichtrings.

Aufgrund der Fliehkraftunterstützung bedarf es nur einer geringen Anpresskraft der Dichtlippe an das Gegenlaufelement.

Erfindungsgemäß ist an der dem Gegenlaufelement zugewandten Seite über den Umfang der Dichtlippe, oder alternativ an der Gegenlauffläche, eine Mehrzahl von Kanälen angeordnet, in denen bei drehender Welle ein Druckaufbau bewirkt wird. Die Kanäle haben die Aufgabe, durch Schleppströmung an dem Gegenlaufelement zirkulierende Luft, die aufgrund der Fliehkraft nach außen drängt, aufzustauen, wodurch in den Kanälen ein Druckaufbau erzeugt wird. Aufgrund dieses Druckaufbaus wird die Kontaktkraft der Lippe mit dem Gegenlaufelement bei rotierender Welle abgesenkt, bis an Stelle der Fluidreibung Gasreibung einsetzt, wodurch ein deutlicher Sprung in der Reibungsminderung erfolgt. Das somit druckbeaufschlagte Gas schiebt das Fluid aus der Kontaktzone und drängt es zurück in das Gehäuse (Motor, Getriebe, etc.).

Vorzugsweise verjüngen sich die Kanäle nach außen, was den Druckaufbau der nach außen strömenden Luft in den Kanälen zur Erzielung der Gasreibung unterstützt. Dies kann insbesondere durch geeignete Anordnung und Formung erreicht werden. Die Kanäle sind vorteilhaft gegen die Radialrichtung geneigt angeordnet, wobei die Neigung gegen die Radialrichtung vorzugsweise im Bereich zwischen 45° und 89° liegt. Des Weiteren verjüngen sich die Bereiche zwischen den Kanälen vorteilhaft nach außen und/oder sind nach innen abgerundet, so dass in einer besonders vorteilhaften Ausführungsform in einer Draufsicht ein Tragflächenprofil zwischen den Kanälen resultiert.

Beeinträchtigungen des Dichtelements durch Druckschwankungen im Gehäuse wird vorteilhaft durch geeignete Formgestaltung und Anbindung an den Versteifungsabschnitt entgegengewirkt. Dies kann vorteilhaft durch eine insgesamt U-förmige Dichtlippe erreicht werden. Vorzugsweise weist die Dichtlippe ausgehend von ihrem freien Ende einen zur Welle hin verlaufenden Abschnitt und daran anschließend einen von der Welle weg verlaufenden Abschnitt auf. Es hat sich gezeigt, dass diese Formgestaltung und insbesondere der von der Welle weg verlaufende Abschnitt der Dichtlippe einem unkontrollierten Abheben der Dichtlippe bei Druckschwankungen und insbesondere Unterdrücken im Gehäuse entgegenwirkt. Vorzugsweise ist zu diesem Zweck der von der Welle weg verlaufende Abschnitt mindestens halb so lang wie der zu der Welle hin verlaufende Abschnitt.

Zusätzlich kann eine außen um das Dichtelement angeordnete Ringwendelfeder vorgesehen sein, die insbesondere die Stabilität gegen Unterdruck im Gehäuse erhöht. Im Unterschied zu der Ringwendelfeder herkömmlicher Radialwellendichtringe, bei der die Feder in Richtung der Anpressung der Dichtlippe an die Gegenlauffläche, und somit parallel zu der Dichtrichtung wirkt, ist die wesentliche Wirkrichtung der vorliegenden Ringwendelfeder senkrecht zu der Richtung der Anpressung der Dichtlippe an die Gegenlauffläche, und somit senkrecht zu der Dichtrichtung orientiert. Vorzugsweise kann die Ringwendelfeder bei stehendem Motor ohne Vorspannung um das Dichtelement herum angeordnet sein. Nur im Falle eines erheblichen Unterdrucks im Gehäuse wird die Dichtlippe radial nach außen gezogen und gelangt dadurch in Wirkkontakt mit der Ringwendelfeder, deren elastische Aufweitung und damit verbundene Rückstellkraft einer weiteren Verschiebung der Dichtlippe radial nach außen entgegenwirkt.

Die Erfindung wird im Folgenden anhand bevorzugter Ausführungsformen unter Bezugnahme auf die beigefügten Figuren erläutert. Dabei zeigt
- Fig. 1: eine Querschnittsansicht eines erfindungsgemäßen axialen Wellendichtrings;
- Fig. 2: eine Draufsicht im Ausschnitt auf den Kontaktbereich des Begrenzungselements;
- Fig. 3: eine Draufsicht im Ausschnitt auf den Kontaktbereich einer Dichtungslippe in einer Ausführungsform der Erfindung;
- Fig. 4 bis 6: Querschnittsansichten von axialen Wellendichtringen in weiteren Ausführungsformen der Erfindung; und
- Fig. 7, 8: Ansichten analog zu den Figuren 3 bzw. 2 in einer alternativen Ausführungsform der Erfindung.

Der axiale Wellendichtring 10 zur Abdichtung einer Welle 11, insbesondere einer Kurbelwelle, die durch eine Öffnung 12 in dem Gehäuse 13 eines Verbrennungsmotors oder Getriebes eines Kraftfahrzeugs geführt ist, umfasst einen insbesondere kreisförmigen Versteifungsabschnitt 14 insbesondere aus Metall oder einem Kunststoff und ein daran anvulkanisiertes Dichtelement 15 aus einem Elastomer. Das Dichtelement 15 umfasst eine Dichtlippe 16, eine nicht-kontaktierende Schmutzlippe 20 auf der Umgebungsseite 22 des Wellendichtrings 10, und ein Anbindungsteil 17, mit dem das Dichtelement 15 an den Versteifungsabschnitt 14 angebunden ist. Das Dichtelement 15 ist vorteilhaft aus einem Stück und in einem Herstellungsschritt gefertigt.

Die Dichtlippe 16 ist im montierten Zustand zum dichtenden Zusammenwirken mit einem sich radial erstreckenden Gegenlaufelement 25 eingerichtet und erstreckt sich zu diesem Zweck vorteilhaft überwiegend axial in Richtung zu dem Gegenlaufelement 25. Das Gegenlaufelement 25 ist fest mit der Welle 11 verbunden. Die Dichtlippe 16 umfasst einen Dicht- oder Endabschnitt 18, der im verbauten Zustand in einem Kontaktbereich 19 über eine axiale Länge a flächig auf dem Gegenlaufelement 25 aufliegt. Die Dichtlippe 16 ist im montierten Zustand trichterförmig zu dem abzudichtenden Raum 21 hin vorgewölbt. Die Dichtlippe 16 endet mit einem in flachem Winkel zu der rotierenden Gegenlauffläche 27 sich radial nach außen ausrichtenden Lippenende 18. Das Lippenende 18 kontaktiert das rotierende Gegenlaufelement 25 in Form einer Kreislinien- oder Kreisflächenberührung. Fluid, welches das Gegenlaufelement 25 oder den kegelförmigen Fortsatz 28 des Laufrings 24 benetzt, wird fliehkraftbedingt nach außen geschleudert und durch den Kreiskontakt der Dichtlippe 16 gehindert, den Fluidraum 21 radial nach innen zu passieren.

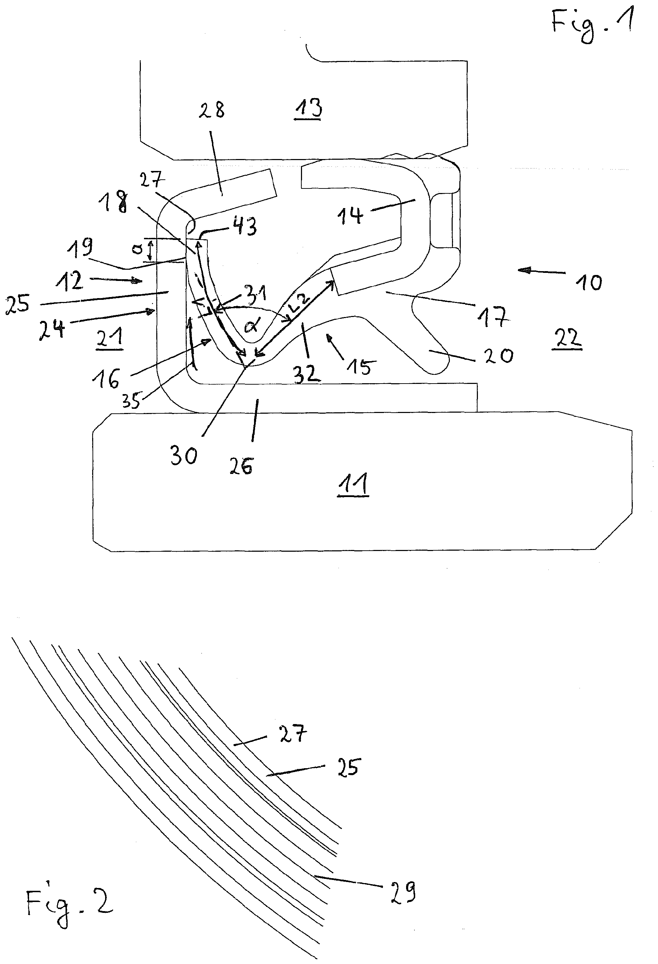

Wie aus Figur 1 ersichtlich, ist im montierten Zustand der einzige Kontakt des Wellendichtrings 10 mit dem wellenfesten Aufbau 11, 24 der Kontakt des Endbereichs 18 der Dichtlippe 16 mit dem Gegenlaufelement 25. Eine in allen Betriebszuständen zuverlässige Abdichtung der Welle 11 sowohl gegen Fluid als auch gegen Staub kann mittels einer Dichtlippe 16 in Kombination mit herkömmlicher berührungsloser Schmutzlippe 20 erreicht werden.

Aufgrund der Fliehkraftunterstützung bedarf es nur einer geringen Anpresskraft der Dichtlippe 16 an das Gegenlaufelement 25. Auf diese Weise kann eine sehr niedrige Reibung des Wellendichtrings 10 erreicht werden bis hin zur Luftreibung.

Um die erforderliche Druckstabilität gegen Druckschwankungen in dem abzudichtenden Raum 21, insbesondere gegen Unterdruck, sicherzustellen, weist die Dichtlippe 16 eine geeignete Formgestaltung und Anbindung an den Versteifungsabschnitt 14 auf. Im Detail erstreckt sich die Dichtlippe 16 im montierten Zustand von dem Kontaktbereich 19 ausgehend zunächst in Richtung zu der Welle 11 hin, bis sie einen Punkt 30 des geringsten Abstands zu der Welle 11 erreicht hat. Von diesem Punkt 30 ausgehend entfernt sich die Dichtlippe 16 wieder von der Welle 11. Die Länge L2 des von der Welle 11 weg verlaufenden Abschnitts 32 der Dichtlippe 16 beträgt vorteilhaft mindestens 50%, weiter vorzugsweise mindestens 60%, noch weiter vorzugsweise mindestens 70% der Länge L1 des zu der Welle 11 hin verlaufenden Abschnitts 31 der Dichtlippe 16. Der von der Welle 11 weg verlaufende Abschnitt 32 der Dichtlippe 16 ist besonders effektiv zur Erhöhung der Stabilität gegen Unterdruck im abzudichtenden Raum 21. Der Winkel α zwischen den beiden Abschnitten 31, 32 der Dichtlippe 16, gemessen jeweils in der Mitte der Abschnitte 31, 32 und am wellennächsten Punkt 30, liegt im montierten Zustand vorteilhaft im Bereich zwischen 40° und 100°, vorzugsweise im Bereich zwischen 40° und 80°, noch weiter vorzugsweise im Bereich zwischen 40° und 70°. Wie aus Figur 1 ersichtlich, ist die Dichtlippe 16 vorzugsweise insgesamt U-förmig.

In der gezeigten Ausführungsform wird das Gegenlaufelement 25 vorteilhaft von einem Laufring 24 ausgebildet, der mit einem axialen Rohrabschnitt 26 auf die Welle 11 aufgezogen ist. Alternativ kann das Gegenlaufelement 25 von der Welle 11 selbst als Radialflansch ausgebildet sein. Die Dichtlippe 16 ist ein freies bzw. bewegliches Teil des Dichtelements 15, im Gegensatz zu dem unbeweglichen Anbindungsteil 17.

Das Gegenlaufelement 25 bzw. die Gegenlauffläche 27 kann vorteilhaft in der Lippenkontaktzone 19 mit einer in Figur 2 gezeigten Förderspiralnut 29 ausgestattet sein, die die Förderwirkung zurück in den Fluidraum 21 unterstützt. Alternativ kann die Gegenlauffläche 27 strukturlos ausgebildet sein.

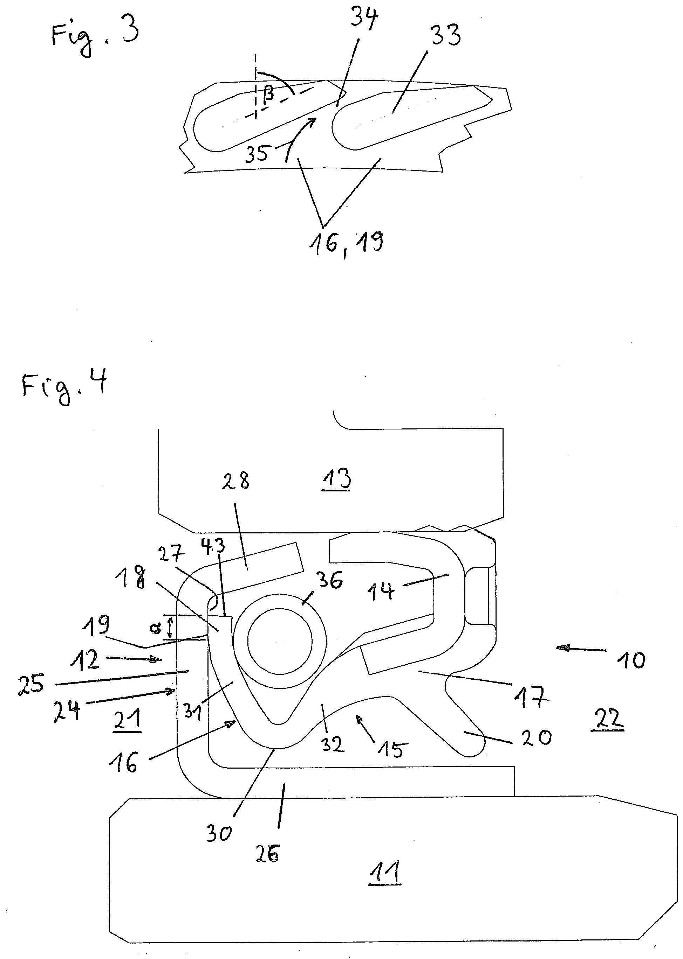

In der Ausführungsform gemäß Figur 3 weist die Dichtlippe 16 im Kontaktbereich 19 über den Umfang der Dichtlippe 16 eine Mehrzahl von Erhebungen 33 auf, die über die Oberfläche der Dichtlippe 16 überstehen bzw. erhaben sind. Zwischen den Erhebungen 33 sind somit Kanäle 34 gebildet, die eine radiale Komponente aufweisen. Bei drehender Welle 11 wird Luft 35 an dem Gegenlaufelement 25 radial nach außen geschleudert (siehe Figur 1) und dadurch in die Kanäle 34 gedrängt (siehe Figur 3), wodurch ein Druck aufgebaut wird, der die Kontaktkraft, mit der die Dichtlippe 16 an dem Gegenlaufelement 25 anliegt, absenkt, bis an Stelle der Fluidreibung Gasreibung einsetzt. Auf diese Weise kann ein deutlicher Sprung in der Reibungsminderung des Wellendichtrings 10 erreicht werden. Die Erhebungen 33 sind vorteilhaft in gleichmäßigen Winkelabständen über den Umfang der Dichtlippe 16 verteilt. Die Winkelteilung zwischen den Erhebungen 33 beträgt vorzugsweise höchstens 10°, weiter vorzugsweise höchstens 5°, beispielsweise 2°. Dementsprechend beträgt die Anzahl der Erhebungen 33 vorteilhaft mindestens 36, vorzugsweise mindestens 72, beispielsweise 180.

Wie aus Figur 3 ersichtlich ist, sind die Erhebungen 33 so geformt, dass sich die Kanäle 34 nach außen verjüngen. Durch dieses Merkmal wird der Druckaufbau in den Kanälen 34 unterstützt.

Aus dem gleichen Grund sind die Erhebungen 33 und/oder die Kanäle 34 vorteilhaft gegen den jeweiligen Radius geneigt, d.h. besitzen vorteilhaft neben der radialen auch eine nicht-radiale Komponente. Aufgrund der nicht-radialen Komponente können die Kanäle 34 im Gegensatz zu rein radialen Kanälen vorteilhaft wesentlich länger sein. Der Neigungswinkel β liegt vorteilhaft im Bereich zwischen 45° und 89°, siehe Figur 3. Die nicht-radiale Komponente der Erhebungen 33 und/oder der Kanäle 34 überwiegt daher vorteilhaft die radiale Komponente.

Die maximale Höhe der Erhebungen 33 liegt vorzugsweise im Bereich 0,01 bis 0,1 mm, weiter vorzugsweise im Bereich 0,02 bis 0,06 mm, noch weiter vorzugsweise im Bereich 0,03 bis 0,05 mm. Die Höhe der Erhebungen 33 kann radial nach außen vorteilhaft abnehmen, so dass auch die Höhe der Kanäle 34 radial nach außen vorzugsweise abnimmt. Durch dieses Merkmal wird der Druckaufbau in den Kanälen 34 ebenfalls unterstützt. Die Erhebungen 33 können sich vorteilhaft radial nach außen verjüngen, wie in Figur 3 gezeigt, und/oder innen abgerundet sein. Insgesamt weisen die Erhebungen 33 in einer Draufsicht vorteilhaft ein Tragflächenprofil auf.

Bei produktionstechnisch vorteilhaften Konstruktionen können die Kanäle 34 auch direkt in die Dichtlippe 16 in Form von Vertiefungen integriert sein. In diesem Fall sind die Bereiche 33 zwischen den Kanälen 34 nicht als Erhebungen ausgeführt, sondern Teil der Dichtfläche 19, so dass auf die Herstellung von Erhebungen vorteilhaft verzichtet werden kann.

In der Ausführungsform gemäß Figur 4 ist außen um das Dichtelement 15, an der von dem Gegenlaufelement 25 abgewandten Seite der Dichtlippe 16, eine Ringwendelfeder 36 angeordnet, vorzugsweise zwischen den Abschnitten 31 und 32 der Dichtlippe 16. Die Ringwendelfeder 36 unterscheidet sich von der Ringwendelfeder eines konventionellen Radialwellendichtrings charakteristisch dadurch, dass die (axiale) Dichtrichtung des vorliegenden Wellendichtrings 10 senkrecht zu der (radialen) Wirkrichtung der Ringwendelfeder 36 orientiert ist. Die Ringwendelfeder 36 gemäß Figur 4 führt also nicht zu einer erhöhten Anpresskraft der Dichtlippe 15 an das Gegenlaufelement 25, und somit auch nicht zu einer erhöhten Reibung des Wellendichtrings 10. Die Funktion der Ringwendelfeder 36 besteht vielmehr darin, eine erhöhte Druckstabilität des Wellendichtrings 10, insbesondere gegen Unterdruck in dem abzudichtenden Raum 21, bereitzustellen. Die Ausführungsform gemäß Figur 4 kann daher bei Motoren mit besonders hohen Druckschwankungen bzw. Unterdrücken zu bevorzugen sein. Die Ringwendelfeder 36 ist vorzugsweise bei stehendem oder gering druckbelastetem Motor vorspannungsfrei um das Dichtelement 15 herum angeordnet. Auch hierin unterscheidet sich die Ringwendelfeder 36 von der Ringwendelfeder eines konventionellen Radialwellendichtrings.

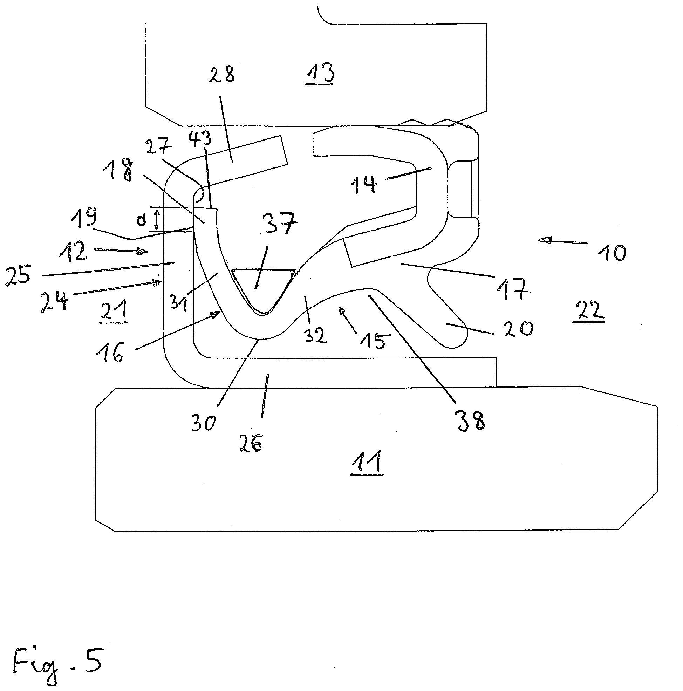

In der alternativen Ausführungsform gemäß Figur 5 ist anstelle der Ringwendelfeder 36 ein äußerer Versteifungsabschnitt 37 aus einem geeignete Material vorgesehen, der die gleiche Funktion hat wie die Ringwendelfeder 36 in Figur 5. Zusätzlich oder alternativ zu dem äußeren Versteifungsabschnitt 37 kann ein innerer Versteifungsabschnitt in dem Bereich 38, d.h. auf der anderen Seite der Dichtlippe 16, vorgesehen sein, der insbesondere gegen Überdrücke in dem abzudichtenden Raum 21 wirksam ist.

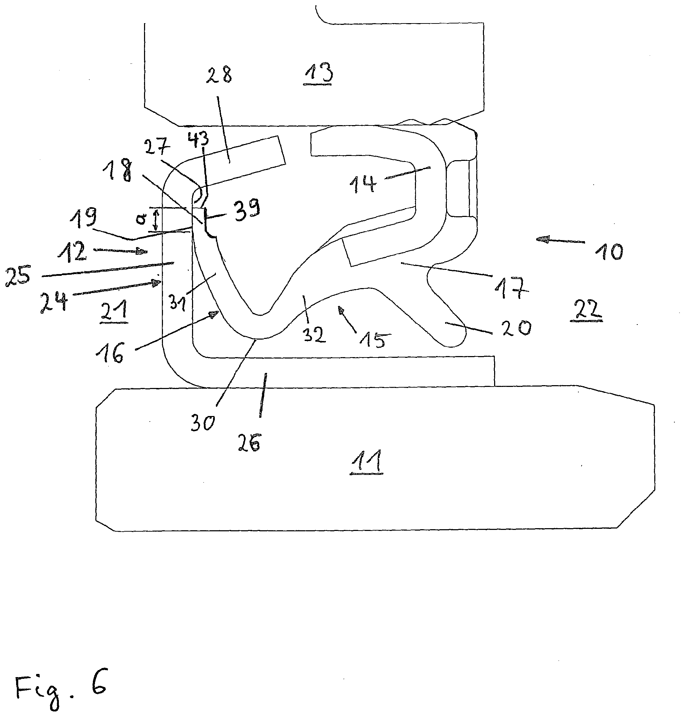

In einer weiteren Ausführungsform gemäß Figur 6 weist die Dichtlippe 16 an ihrem freien Ende 43 und an ihrer von dem Gegenlaufelement 25 abgewandten Seite eine umlaufende Schwächung 39 auf, um das Abheben des Kontaktbereichs 18 von dem Gegenlaufelement 25 und somit den Übergang zur Luftreibung zu erleichtern. Die Ausführungsform gemäß Figur 6 ist auch mit den Ausführungsformen gemäß den Figuren 4 und 5 kombinierbar. Die Ausführungsform gemäß Figur 2 und/oder Figur 3 ist mit jeder Ausführungsform gemäß den Figuren 4, 5 und/oder 6 kombinierbar.

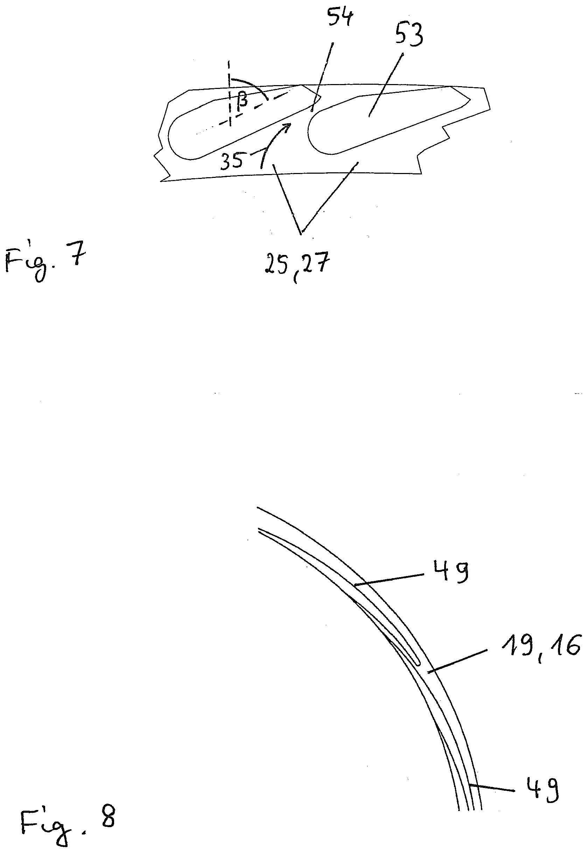

In der zu Figur 3 alternativen Ausführungsformen gemäß Figur 7 sind die Erhebungen 53, anstelle der an Dichtlippe 16, an dem Gegenlaufelement 25 im Bereich der Gegenlauffläche 27 angeordnet. Die Gestaltung und Neigung β der Erhebungen 53, die Form und Funktion der dazwischen gebildeten Kanäle 54 und die Fließrichtung der Luft 35 sind dabei identisch zu der Anordnung an der Dichtlippe gemäß Figur 3. In dieser Ausführungsform kann die Dichtlippe 16 im Kontaktbereich 19 vorteilhaft Förderstrukturen 49 aufweisen wie in Figur 8 gezeigt. Alternativ kann die Dichtlippe 16 im Kontaktbereich 19 strukturlos ausgeführt sein.

Bei produktionstechnisch vorteilhaften Konstruktionen können die Kanäle 54 auch direkt in das Gegenlaufelement 25 in Form von Vertiefungen integriert sein. In diesem Fall sind die Bereiche 53 zwischen den Kanälen 54 nicht als Erhebungen ausgeführt, sondern Teil der Gegenlauffläche 27, so dass auf die Herstellung von Erhebungen vorteilhaft verzichtet werden kann.

Die Ausführungsform gemäß Figur 7 und/oder Figur 8 ist mit jeder Ausführungsform gemäß den Figuren 4, 5 und/oder 6 kombinierbar.

## Patentansprüche

1. Axialer Wellendichtring (10) zur Abdichtung einer Welle (11) gegen ein Gehäuse (13), umfassend einen Versteifungsabschnitt (14) und ein an den Versteifungsabschnitt (14) angebundenes Dichtelement (15) mit einer Dichtlippe (16), die zum dichtenden Zusammenwirken mit einem mit der Welle (11) verbindbaren, radial verlaufenden Gegenlaufelement (25) eingerichtet ist, wobei im Montagezustand ausschließlich zwischen einem Endbereich (18) der Dichtlippe (16) und dem radialen Gegenlaufelement (25) ein Dichtkontakt besteht, **dadurch gekennzeichnet, dass** an der dem Gegenlaufelement (25) zugewandten Seite und über den Umfang der Dichtlippe (16), oder an der Gegenlauffläche (27) und über den Umfang des Gegenlaufelements (25), eine Mehrzahl von Kanälen (34; 54) angeordnet sind, in denen bei drehender Welle (11) ein Druckaufbau bewirkt wird.

2. Axialer Wellendichtring nach Anspruch 1, **dadurch gekennzeichnet, dass** die Kanäle (34; 54) sich nach außen verjüngen.

3. Axialer Wellendichtring nach Anspruch 1 oder 2, **dadurch gekennzeichnet, dass** die Kanäle (34; 54) und/oder Bereiche (33; 53) zwischen den Kanälen (34; 54) gegen die Radialrichtung um einen Winkel β geneigt angeordnet sind.

4. Axialer Wellendichtring nach Anspruch 3, **dadurch gekennzeichnet, dass** der Neigungswinkel β im Bereich zwischen 45° und 89° liegt.

5. Axialer Wellendichtring nach einem der vorangehenden Ansprüche, **dadurch gekennzeichnet, dass** Bereiche (33; 53) zwischen den Kanälen (34; 54) sich nach außen verjüngen und/oder innen abgerundet sind.

6. Axialer Wellendichtring nach einem der vorangehenden Ansprüche, **dadurch gekennzeichnet, dass** die maximale Tiefe der Kanäle (34; 54) im Bereich zwischen 0,01 mm und 0,1 mm liegt.

7. Axialer Wellendichtring nach einem der vorangehenden Ansprüche, **dadurch gekennzeichnet, dass** die Tiefe der Kanäle (34; 54) sich nach außen verringert.

8. Axialer Wellendichtring nach einem der vorangegangenen Ansprüche, **dadurch gekennzeichnet, dass** die Dichtlippe (16) insgesamt U-förmig ist.

9. Axialer Wellendichtring nach einem der vorangegangenen Ansprüche, **dadurch gekennzeichnet, dass** die Dichtlippe (16) ausgehend von ihrem freien Ende (43) einen zur Welle (11) hin verlaufenden Abschnitt (31) und daran anschließend einen von der Welle (11) weg verlaufenden Abschnitt (32) aufweist.

10. Axialer Wellendichtring nach Anspruch 9, **dadurch gekennzeichnet, dass** der von der Welle (11) weg verlaufende Abschnitt (32) mindestens halb so lang ist wie der zu der Welle (11) hin verlaufende (31) Abschnitt.

11. Axialer Wellendichtring nach Anspruch 9 oder 10, **dadurch gekennzeichnet, dass** der Winkel α zwischen den beiden Abschnitten (31, 32) der Dichtlippe (16) im montierten Zustand im Bereich zwischen 40° und 100° liegt.

12. Axialer Wellendichtring nach einem der vorangegangenen Ansprüche, **dadurch gekennzeichnet, dass** die Dichtlippe (16) an ihrem freien Ende (43) und an ihrer von dem Gegenlaufelement (25) abgewandten Seite eine umlaufende Schwächung (39) aufweist.

13. Axialer Wellendichtring nach einem der vorangegangenen Ansprüche, **dadurch gekennzeichnet, dass** eine außen um das Dichtelement (15) angeordnete, senkrecht zu der Dichtrichtung wirkende Ringwendelfeder (36) vorgesehen ist.

14. Axialer Wellendichtring nach Anspruch 13, **dadurch gekennzeichnet, dass** die Ringwendelfeder (36) bei stehendem Motor vorspannungsfrei um das Dichtelement (15) herum angeordnet ist.

## Claims

1. Axial shaft seal (10) for sealing a shaft (11) against a housing (13), comprising a stiffening section (14) and, connected to the stiffening section (14), a sealing element (15) having a sealing lip (16) which is established for sealing interaction with a counter-running element (25) which can be connected to the shaft (11) and runs radially, wherein in the assembled state a sealing contact exists exclusively between an end section (18) of the sealing lip (16) and the radial counter-running element (25), **characterized in that** a plurality of channels (34; 54) is arranged on the side facing towards the counter-running element (25) and over the periphery of the sealing lip (16), or on the counter-running surface (27) and over the periphery of the counter-running element (25), in which a pressure build-up is caused when the shaft (11) is rotating.

2. Axial shaft seal according to claim 1, **characterized in that** the channels (34; 54) taper outwards.

3. Axial shaft seal according to claim 1 or 2, **characterized in that** the channels (34; 54) and/or sections (33; 53) between the channels (34; 54) are inclined against the radial direction by an angle β.

4. Axial shaft seal according to claim 3, **characterized in that** the inclination angle β ranges between 45° and 89°.

5. Axial shaft seal according to any one of the preceding claims, **characterized in that** sections (33; 53) between the channels (34; 54) taper outwards and/or are rounded inwards.

6. Axial shaft seal according to any one of the preceding claims, **characterized in that** the maximum depth of the channels (34; 54) ranges between 0.01 mm and 0.1 mm.

7. Axial shaft seal according to any one of the preceding claims, **characterized in that** the depth of the channels (34; 54) reduces outwards.

8. Axial shaft seal according to any one of the preceding claims, **characterized in that** the sealing lip (16) is U-shaped overall.

9. Axial shaft seal according to any one of the preceding claims, **characterized in that** the sealing lip (16) has a section (31) which runs towards the shaft (11) originating from its free end (43) and, connecting to this, a section (32) running away from the shaft (11).

10. Axial shaft seal according to claim 9, **characterized in that** the section (32) running away from the shaft (11) is at least half as long as the section (31) running towards the shaft (11).

11. Axial shaft seal according to claim 9 or 10, **characterized in that** the angle α between the two sections (31, 32) of the sealing lip (16) in the assembled state ranges between 40° and 100°.

12. Axial shaft seal according to any one of the preceding claims, **characterized in that** the sealing lip (16) has a peripheral weakening (39) on its free end (43) and on its side facing away from the counter-running element (25).

13. Axial shaft seal according to any one of the preceding claims, **characterized in that** a ring coil spring (36) which is arranged around the outside of the sealing element (15) and acts perpendicularly to the sealing direction is provided.

14. Axial shaft seal according to claim 13, **characterized in that** the ring coil spring (36) is arranged around the sealing element (15) without preloading in the case of a stopped engine.

## Revendications

1. Bague à lèvres avec ressort axiale (10) destinée à l'étanchéification d'un arbre (11) par rapport à un carter (13), comprenant une portion de renforcement (14) et un joint (15) relié à la portion de renforcement (14) et doté d'une lèvre d'étanchéité (16), qui est configurée pour la coopération d'étanchéification avec un élément en opposition (25), qui s'étend radialement et peut être relié à l'arbre (11), un contact étanche existant, à l'état monté, uniquement entre une zone d'extrémité (18) de la lèvre d'étanchéité (16) et l'élément en opposition (25) radial, **caractérisée en ce que**, sur le côté faisant face à l'élément en opposition (25) et sur la circonférence de la lèvre d'étanchéité (16), ou sur la surface en opposition (27) et sur la circonférence de l'élément en opposition (25), sont disposés une pluralité de canaux (34 ; 54), dans lesquels une montée en pression est provoquée lorsque l'arbre (11) tourne.

2. Bague à lèvres avec ressort axiale selon la revendication 1, **caractérisée en ce que** les canaux (34 ; 54) s'amincissent vers l'extérieur.

3. Bague à lèvres avec ressort axiale selon la revendication 1 ou 2, **caractérisée en ce que** les canaux (34 ; 54) et/ou des zones (33 ; 53) entre les canaux (34 ; 54) sont disposés inclinés selon un angle β par rapport à la direction radiale.

4. Bague à lèvres avec ressort axiale selon la revendication 3, **caractérisée en ce que** l'angle d'inclinaison β se situe dans la plage entre 45° et 89°.

5. Bague à lèvres avec ressort axiale selon l'une des revendications précédentes, **caractérisée en ce que** les zones (33 ; 53) entre les canaux (34 ; 54) s'amincissent vers l'extérieur et/ou sont arrondies à l'intérieur.

6. Bague à lèvres avec ressort axiale selon l'une des revendications précédentes, **caractérisée en ce que** la profondeur maximale des canaux (34 ; 54) se situe dans la plage entre 0,01 mm et 0,1 mm.

7. Bague à lèvres avec ressort axiale selon l'une des revendications précédentes, **caractérisée en ce que** la profondeur des canaux (34 ; 54) diminue vers l'extérieur.

8. Bague à lèvres avec ressort axiale selon l'une des revendications précédentes, **caractérisée en ce que** la lèvre d'étanchéité (16) est globalement en forme de U.

9. Bague à lèvres avec ressort axiale selon l'une des revendications précédentes, **caractérisée en ce que** la lèvre d'étanchéité (16) comporte, à partir de son extrémité libre (43), une portion (31) s'étendant vers l'arbre (11) et, adjacente à cette dernière, une portion (32) s'éloignant de l'arbre (11).

10. Bague à lèvres avec ressort axiale selon la revendication 9, **caractérisée en ce que** la portion (32) s'éloignant de l'arbre (11) est au moins à moitié aussi longue que la portion (31) s'étendant vers l'arbre (11).

11. Bague à lèvres avec ressort axiale selon la revendication 9 ou 10, **caractérisée en ce que** l'angle α entre les deux portions (31, 32) de la lèvre d'étanchéité (16) se situe, à l'état monté, dans la plage entre 40° et 100°.

12. Bague à lèvres avec ressort axiale selon l'une des revendications précédentes, **caractérisée en ce que** la lèvre d'étanchéité (16) comporte un affaiblissement (39) circonférentiel sur son extrémité libre (43) et sur son côté orienté dans la direction opposée à l'élément en opposition (25).

13. Bague à lèvres avec ressort axiale selon l'une des revendications précédentes, **caractérisée en ce qu'**un ressort spiral annulaire (36) est prévu disposé à l'extérieur autour du joint (15) et agissant perpendiculairement à la direction d'étanchéité.

14. Bague à lèvres avec ressort axiale selon la revendication 13, **caractérisée en ce que** le ressort spiral annulaire (36) est disposé autour du joint (15) sans précontrainte lorsque le moteur est à l'arrêt.
